# EUROPEAN PATENT APPLICATION

(11) **EP 1 195 831 A1**
(43) Date of publication of application: **10.04.2002**
(21) Application number: 00927842.5
(22) Date of filing: 22.05.2000
(51) Int. Cl.: H01M 8/24, H01M 8/04, H01M 8/10

(54) **POLYMER ELECTROLYTE FUEL CELL AND ITS USAGE**

(30) Priority: 28.05.1999 JP 14989599
(71) Applicant: MATSUSHITA ELECTRIC INDUSTRIAL CO., LTD., Kadoma-shi, Osaka 571-8501 (JP)
(72) Inventor: SAKAI, Osamu, Neyagawa-shi, Osaka 572-0055 (JP); GYOTEN, Hisaaki, Shijonawate-shi, Osaka 575-0013 (JP); HATOH, Kazuhito, Osaka-shi, Osaka 536-0015 (JP); YASUMOTO, Eiichi, Soraku-gun, Kyoto 619-0238 (JP); NISHIDA, Kazufumi, Moriguchi-shi, Osaka 570-0016 (JP); UCHIDA, Makoto, Hirakata-shi, Osaka 573-1145 (JP); OHARA, Hideo, Katano-shi, Osaka 576-0016 (JP); SUGAWARA, Yasushi, Settsu-shi, Osaka 566-0025 (JP); MORITA, Junji, Moriguchi-shi, Osaka 570-0031 (JP); MATSUMOTO, Toshihiro, Ibaraki-shi, Osaka 567-0821 (JP); KANBARA, Teruhisa, Ikeda-shi, Osaka 563-0021 (JP)
(74) Representative: Leson, Thomas Johannes Alois, Dipl.-Ing.
(86) International application number: JP0003275
(87) International publication number: WO0074165

(57) **Abstract**

The present specification discloses a polymer electrolyte fuel cell comprising a stack containing a plurality of unit cells laminated, compressed and retained via a retaining plate, the unit cell comprising a pair of electrodes sandwiching a polymer electrolyte membrane therebetween and a conductive separator plates having a gas supply channel on at least one surface thereof and sandwiching the electrodes therebetween, wherein the retaining plate forms a gap between the unit cells. According to the fuel cell of the present invention, it is possible to readily remove a defective unit cell from the stack and replace the same.

## Description

### Technical Field

The present invention relates to a polymer electrolyte fuel cell and a method of using the same.

### Background Art

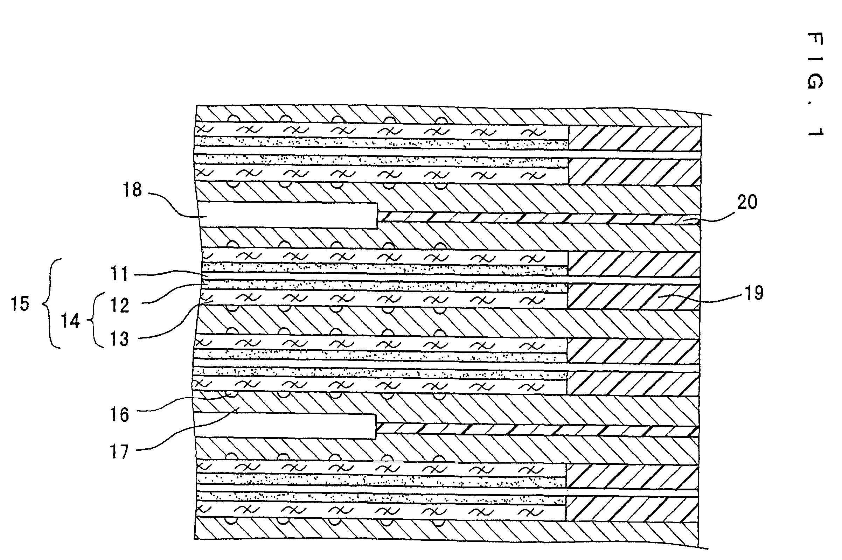

A polymer electrolyte fuel cell simultaneously generates electric power and heat by electrochemically reacting a fuel gas such as hydrogen and an oxidant gas such as air at gas diffusion electrodes. A typical structure of such a polymer electrolyte fuel cell is shown in FIG. 1. FIG. 1 is a partial sectional view schematically showing a conventional polymer electrolyte fuel cell.

In FIG. 1, onto both surfaces of a polymer electrolyte membrane 11 for selectively transporting hydrogen ions, catalytic reaction layers 12 each of which is mainly composed of a carbon powder with a platinum metal catalyst carried thereon are closely attached. Further, onto the outer surfaces of the catalytic reaction layers 12, a pair of gas diffusion layers 13 each having both gas permeability and electronic conductivity are closely attached. The diffusion layer 13 and the catalyst layer 12 constitute an electrode 14.

Also, disposed outside the electrode 14 are conductive separator plates 17, which mechanically fix an electrolyte membrane and electrode assembly 15 (hereinafter, referred to as "MEA") formed by the electrode 14 and the polymer electrolyte membrane 11, while connecting adjacent MEAs electrically in series, and which have a gas flow channel 16 on at least one surface thereof for supplying a reacting gas to the electrode 14 and carrying away a gas generated by the reaction and the remaining excess gas. Although the gas flow channel 16 can be provided separately from the separator plate 17, grooves are usually formed on the separator plate 17 to serve as the gas flow channel.

Further, on the other surface of the separator plate 17, which has the gas flow channel 16 on one surface thereof, a cooling water flow channel 18 for circulating a cooling water is formed in order to keep the cell temperature constant. By circulating a cooling water through this cooling water flow channel 18, thermal energy generated by the cell reaction can be utilized, for example, in the form of warm water.

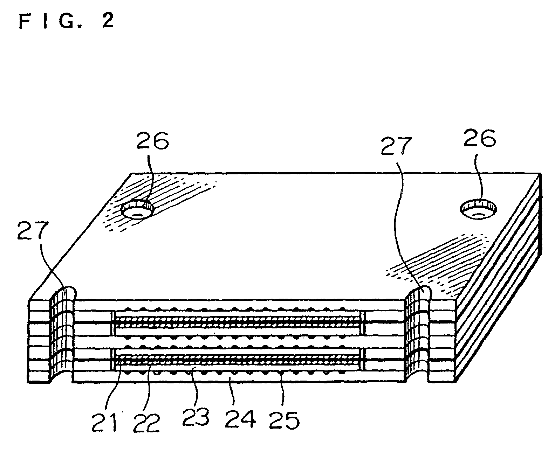

As such a laminated-type cell, a so-called internal manifold type is common, in which a gas supply aperture, a gas discharge aperture, a cooling water supply aperture and a cooling water discharge aperture are secured inside the laminated cell. Here, FIG. 2 shows a schematic perspective view of a cell module comprising two unit cells in an internal manifold type polymer electrolyte fuel cell.

As is shown in FIG. 2, a polymer electrolyte membrane 21, a catalytic reaction layer 22, a diffusion layer 23 and a separator plate 24 are laminated to form a unit cell, and a gas flow channel 25 is formed on the separator plate 24. Then, a manifold 26, through which a gas is supplied to or discharged from the cell, and a manifold 27, through which water for cooling the cell is supplied or discharged, are formed.

Further, in the above polymer electrolyte fuel cell, it is necessary to clamp the entire stack constantly in order to decrease an electrical contact resistance between the components such as bipolar plates disposed in a stack obtained by laminating unit cells. For this purpose, it is effective to provide two end plates on both ends of the stack obtained by laminating many unit cells in one direction, and fix the stack between the two end plates by means of a clamping member. Also, it is preferred to clamp the stack on the whole surface of each unit cell as uniformly as possible, and a metal material such as stainless steel is generally used as the clamping member for the end plates or the like from the standpoint of the mechanical strength.

However, in the above polymer electrolyte fuel cell, a plurality of unit cells are laminated electrically in series, so that the performance of the fuel cell as a whole is deteriorated when only one unit cell of low performance due to a manufacturing failure or one unit cell whose performance has been deteriorated during the operation of the cell is present in the stack. Additionally, since the above polymer electrolyte fuel cell stack is constantly clamped from both ends, it is difficult to remove a unit cell of low performance alone and replace the same.

Therefore, the present invention provides a polymer electrolyte fuel cell which allows an easy removal of a defective unit cell from the stack and the replacement thereof and the method of using the same.

### Disclosure of Invention

In order to achieve the foregoing object, the present invention provides a polymer electrolyte fuel comprising a stack containing a plurality of unit cells laminated, compressed and retained via a retaining plate, the cell comprising a pair of electrodes sandwiching a polymer electrolyte membrane therebetween and conductive separator plates having a gas flow channel on at least one surface thereof and sandwiching the above electrodes, wherein the retaining plate forms a gap between the unit cells.

In the above fuel cell, it is effective that the retaining plate is composed of two plates each having an undulate cross section and has hollow sections which are separated from one another, and a cooling water flows through the hollow sections between the unit cells. In other words, it is effective that the retaining plate functions as a cooling water flow channel.

It is also effective that the conductive separator plate is provided for every two unit cells and has a cooling water flow channel, and the retaining plate is provided for every one cell module comprising a plurality of the above unit cells.

Further, it is effective that the fuel cell comprises a voltage measurement jig and a voltage display device for the unit cell.

Further, the present invention also relates to a method of using the above fuel cell.

More specifically, the present invention also relates to a method of using a polymer electrolyte fuel cell comprising: a stack containing a plurality of unit cells laminated, compressed and retained via a retaining plate, the unit cell comprising a pair of electrodes sandwiching a polymer electrolyte membrane therebetween and conductive separator plates having a gas supply channel on at least one surface thereof and sandwiching the above electrodes; a voltage measurement jig; and a voltage display device for the above unit cell, wherein the retaining plate forms a gap between the unit cells or between the cell modules each comprising a plurality of the unit cells,
the method comprising the steps of: measuring the voltage of the unit cell or the cell module; and replacing the unit cell or the cell module when the voltage of the unit cell or the cell module is detected to be predetermined value or less.

According to this using method, it is possible to readily replace a defective unit cell or a cell module comprising a plurality of such unit cells in a polymer electrolyte fuel cell stack.

### Brief Description of Drawings

FIG. 1 is a partial sectional view schematically showing a conventional polymer electrolyte fuel cell.
FIG. 2 is a schematic perspective view of a cell module comprising two unit cells in an internal manifold type polymer electrolyte fuel cell.
FIG. 3 is a diagram illustrating a method of producing a polymer electrolyte fuel cell in accordance with the present invention.
FIG. 4 is a schematic perspective view of the polymer electrolyte fuel cell produced in Example 1.
FIG. 5 is a schematic sectional view of a relevant part of the fuel cell of the present invention shown in FIG. 4.
FIG. 6 is a graph showing the performance of the polymer electrolyte fuel cell of Example 1.
FIG. 7 is a schematic sectional view of a relevant part of the polymer electrolyte fuel cell produced in Example 2.

### Best Mode for Carrying Out the Invention

The present invention provides a polymer electrolyte fuel cell comprising a stack containing a plurality of unit cells laminated, compressed and retained via a retaining plate, the unit cell comprising a pair of electrodes sandwiching a polymer electrolyte membrane therebetween and conductive separator plates having a gas supply channel on at least one surface thereof and sandwiching the electrodes, wherein the retaining plate forms a gap between the unit cells.

By forming a gap between the unit cells by means of the retaining plate in this manner, a unit cell with a defect such as decreased voltage can be readily removed from the stack and replaced with a new unit cell.

Herein, descriptions will be made on the retaining plate. The material, which constitutes the retaining plate used in the present invention, is not particularly restricted as long as it has conductivity so as to decrease an electrical contact resistance and to prevent the insulation between unit cells, is capable of fixing the unit cells in the stack and is not damaged by the pressure in the laminating direction of the stack. Specific examples of such material include, for instance, metal such as stainless steel (SUS).

Also, the shape of the retaining plate is not particularly restricted as long as it is a shape capable of forming a gap between the unit cells while allowing the removal and installation of the unit cell from and in the stack. Examples of the shape of the cross section include, for instance, undulate, saw blade and concavo-convex. Additionally, a porous metallic material such as a spongy metal or a compressing jig composed of two metal plates with a spring interposed therebetween, can also be used in order to form a gap in the present invention.

Further, in the present invention, it is preferred to use, as the retaining plate, a retaining plate which is formed by bonding together two plates having an undulate cross section at the ridges of the plates and which has hollow sections that are separated from one another. Since the hollow sections are also separated from other constituting elements of the stack, the retaining plate can function as a cooling water flow channel by allowing a cooling water to flow through a part of the plural hollow sections. In this case, the cooling water is allowed to flow especially through the hollow sections located at the center of the retaining plate.

Also, a cooling water, an oxidant gas and a fuel gas may be supplied and discharged through the manifolds disposed at the sides of the stack.

When the retaining plate composed of two plates is used in this manner, there is a fear that the compactness may become inferior, as compared with a common stack structure in which unit cells are laminated and then compressed from both ends; however, the compactness can be maintained by utilizing, as the cooling water flow channel, the inner hollow sections formed by placing the two plates each having an undulate cross section one upon another.

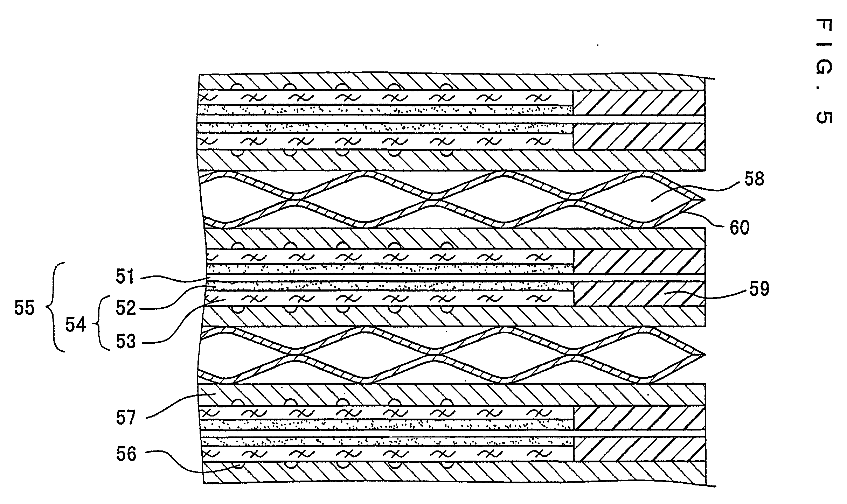

Also, in a polymer electrolyte fuel cell of the present invention, the retaining plate may be provided for every one unit cell supported by conductive separators at the top and bottom thereof (the details will be described later with reference to FIG. 5), or alternatively, the retaining plate may be provided for every two unit cells. In the case of the latter, for example, the conductive separator disposed between the two unit cells may be provided with a gas flow channel on the both surfaces thereof, the conductive separator disposed at the top or bottom of each of the two unit cells may be provided with a gas flow channel on one surface thereof, and the retaining plate may be disposed between the cell modules each comprising two unit cells.

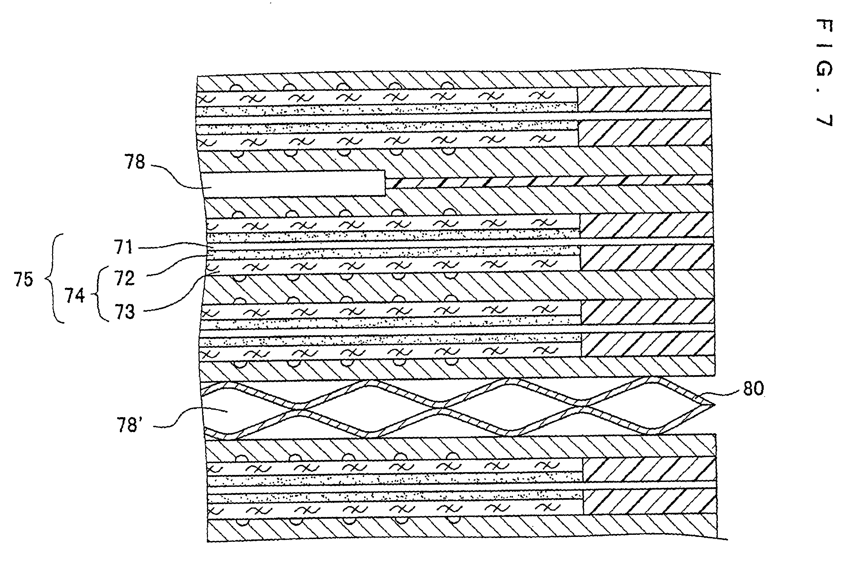

However, the number of unit cells included in the cell module comprising a plurality of unit cells is not particularly restricted, and the retaining plate may be disposed between the cell modules each comprising a plurality of the unit cells, while forming the cooling water flow channel between the conductive separators, as will be explained later with reference to FIG. 7. In addition, the retaining plate also forms a cooling water flow channel in FIG. 7.

As discussed above, the provision of the retaining plate between the unit cells or the cell modules each comprising a plurality of unit cells is advantageous in that it allows the replacement of the unit cells or the cell modules.

Therefore, it is effective that a polymer electrolyte fuel cell of the present invention comprises a voltage measurement device and a voltage display device for the unit cell. By providing such voltage measurement device and voltage display device, it is possible to quickly and precisely detect and replace a defective unit cell with decreased voltage or a cell module comprising the above unit cell.

Further, a polymer electrolyte fuel cell of the present invention may adopt a conventional structure in which a stack comprising the unit cell, the conductive separator and the retaining plate laminated is clamped, while being compressed, at the both ends in the laminating direction thereof to be fixed. In this case, if unclamped, the unit cell or the cell module can be replaced. Also, by adopting another structure in which the fuel cell is formed by inserting a stack into a cabinet having a predetermined dimension, the unit cells or the cell modules aligned in one direction can be removed and installed from one side of the cabinet of the stack, for example.

Additionally, as for the manifold used for supplying and discharging a gas and a cooling water, a so-called external manifold may be used as described above.

Further, the present invention also relates to a method of using the above fuel cell.

More specifically, the present invention also relates to a method of using a polymer electrolyte fuel cell comprising: a stack containing a plurality of unit cells laminated, compressed and retained via a retaining plate, the unit cell comprising a pair of electrodes sandwiching a polymer electrolyte membrane therebetween and conductive separator plates having a gas supply channel on at least one surface thereof and sandwiching the electrodes therebetween; a voltage measurement jig; and a voltage display device for the unit cell, wherein the retaining plate forms a gap between the unit cells or between cell modules each comprising a plurality of the unit cells, the method comprising the steps of: measuring the voltage of the unit cell or the cell module; and replacing the unit cell or the cell module when the above voltage of the unit cell or the cell module is detected to be predetermined value or less.

In the following, a polymer electrolyte fuel cell of the present invention will be more concretely described with reference to drawings. However, the present invention is not limited to these.

### Example 1

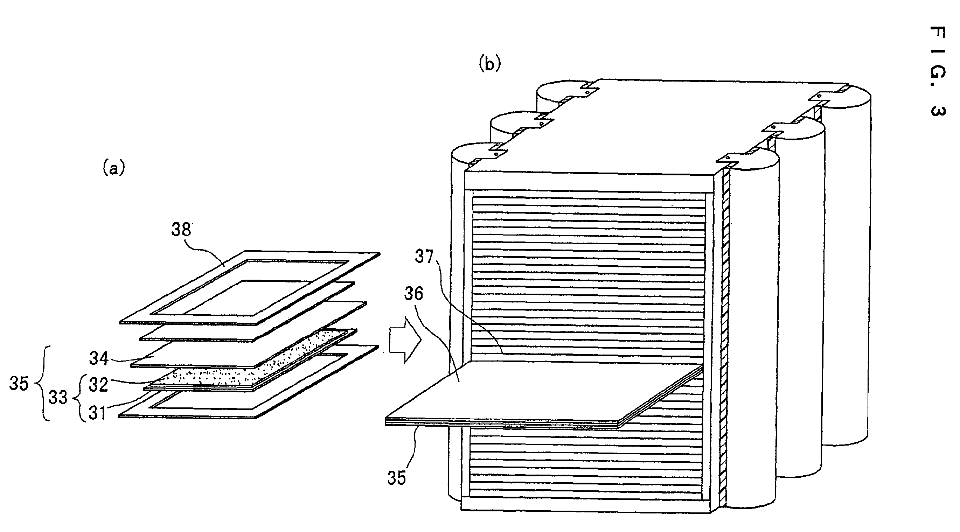

A method of producing a fuel cell in accordance with the present invention will be described with reference to FIG. 3.

FIG. 3 is a diagram illustrating a method of producing a polymer electrolyte fuel cell in accordance with the present invention.

First, a carbon powder having a particle size of several microns or less is immersed in an aqueous solution in which equimolar chloroplatinic acid and ruthenium chloride acid were dissolved, and a platinum-ruthenium catalyst was carried on the surface of the carbon powder by reduction. Here, the weight ratio between carbon and the carried catalyst was 1:1. Subsequently, the catalyst carrying carbon powder was dispersed in an alcohol solution of a polymer electrolyte to yield a slurry.

Meanwhile, a carbon paper having a thickness of 400 µm serving as the electrode base material (diffusion layer) was impregnated with an aqueous dispersion of a fluorocarbon resin (Neoflon ND-1 manufactured by DAIKIN INDUSTRIES, Ltd.), and it was then dried and heat-treated at 400°C for 30 minutes to impart water repellency to the carbon paper.

Next, the slurry containing the carbon powder was uniformly applied onto one surface of the carbon paper serving as a diffusion layer, which had been subjected to water repellency, to form a catalytic reaction layer, thereby obtaining an electrode comprising the diffusion layer and the catalytic reaction layer.

Then, as indicated with (a) in FIG. 3, two sheets of an electrode 33 comprising a diffusion layer 31 and a catalytic reaction layer 32 were placed on both surfaces of a polymer electrolyte membrane 34 having a bigger dimension than the electrode 33 in such a manner that each of the surfaces having the catalytic reaction layer 32 was faced with the polymer electrolyte membrane 34 and positioned at the center of the polymer electrolyte membrane 34, and a gasket 38 made of silicone rubber was further provided. Thereafter, it was hot-pressed at 100°C for 5 minutes to obtain an electrolyte membrane and electrode assembly (MEA) 35. Subsequently, the MEA 35 was cut into a size having a length of 20 cm and a width of 10 cm.

As indicated with (b) in FIG. 3, the obtained MEA 35 was sandwiched by a pair of separator plates 36 to give a unit cell. As the separator plates 36, ones made of carbon having air-tightness and a thickness of 4 mm were used. Also, on the surfaces of the separator plates 36 in contact with the MEA 35, a gas flow channel having a width of 2 mm and a depth of 1 mm was formed by cutting.

As the end plates disposed at the top and bottom which form a stack comprising unit cells, end plates made of SUS were used, and a retaining plate 37 composed of two plates was arranged parallel to these end plates at regular intervals so as to form a frame into which the unit cell was to be inserted. As the retaining plate 37, an SUS plate having an undulate cross section was used, whose surface had been coated with 3 µm of Au plating for improving the corrosion resistance and decreasing the contact resistance.

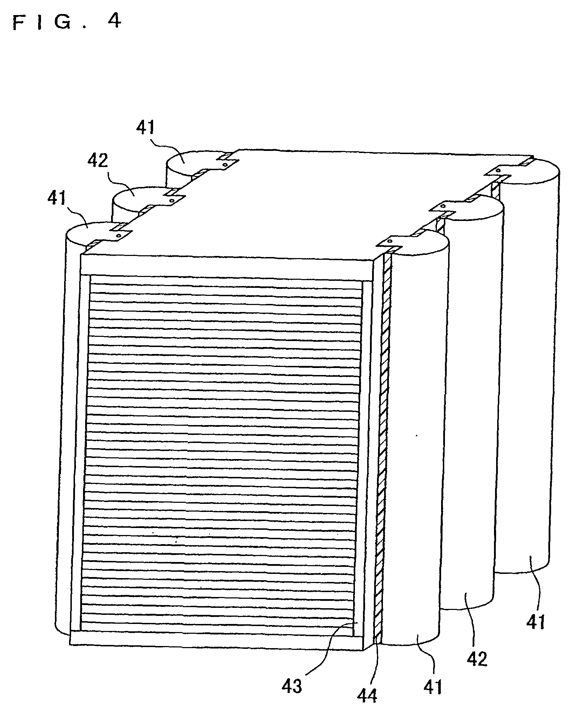

In the fuel cell of this example, 30 frames were formed, each of which a unit cell could be inserted into, and manifolds 41 and 42 were disposed on both sides of the stack via an insulating material 43 and a gasket 44 as shown in FIG. 4. Through the manifolds 41 and 42, hydrogen, air and a cooling water were supplied and discharged. FIG. 4 is a schematic perspective view of the polymer electrolyte fuel cell produced in this example.

Also, FIG. 5 shows a schematic sectional view of a relevant part of the fuel cell of the present invention shown in FIG. 4. In a retaining plate 60 composed of two plates each having an undulate cross section, only several aligned hollow sections at the center, where the manifold 42 for a cooling water was in contact with the cross section of the retaining plate 60, were used as the cooling water flow channel, among a plurality of aligned hollow sections which were separated from one another.

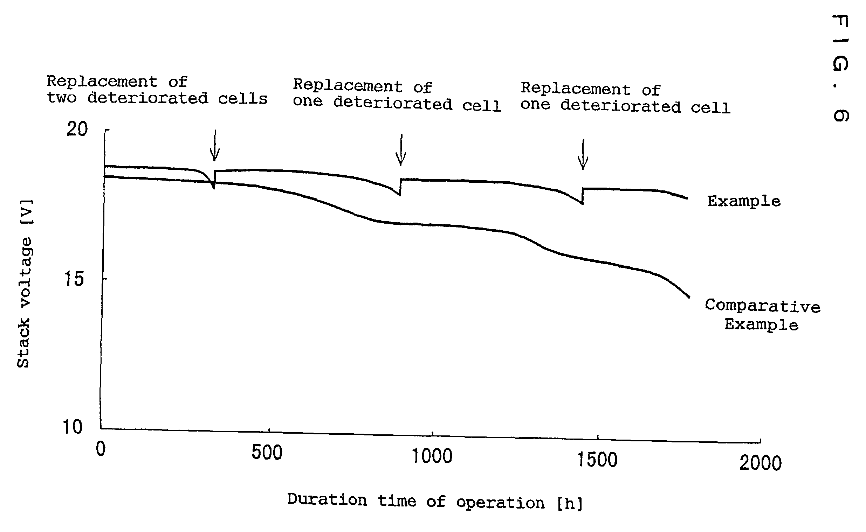

On the fuel cell produced in the above manner, a performance test was conducted by using a simulated reformed gas (80 % by volume of hydrogen, 20 % by volume of carbon dioxide and 100 ppm of carbon monoxide) as a fuel gas and air as an oxidant gas. The performance test was conducted by means of a gas humidifier, under the conditions of a hydrogen utilization ratio of 70%, an oxygen utilization ratio of 20%, a bubbler temperature for humidifying hydrogen of 85°C, a bubbler temperature for humidifying air of 75°C, a cell temperature of 75°C and a current density of 0.7 A/cm². In this performance test, the operation of the cell was performed while measuring the voltage of each unit cell, and after the start of the operation, a unit cell whose closed circuit voltage dropped to 0.4 V was taken out and a new unit cell was inserted to continue the operation of the cell. Herein, the operation was suspended during the replacement of the unit cell. FIG. 6 shows the relation between the time at which the replacement of the unit cell was conducted after the start of the operation of the fabricated fuel cell and the closed circuit voltage of the fuel cell. Additionally, FIG. 6 shows the performance of the fuel cell in the case where the operation was continuously performed without conducting the above replacement, for comparison. FIG. 6 demonstrates that according to the present invention, it is possible to readily replace a unit cell with deteriorated performance thereby to maintain the performance of the fuel cell for a long period.

### Example 2

A cell module comprising a plurality of unit cells was configured, and a polymer electrolyte fuel cell which allowed the replacement of the entire cell module was fabricated by using the retaining plate 37 composed of two plates each having an undulate cross section, as in Example 1. FIG. 7 shows a schematic sectional view of a relevant part of the polymer electrolyte fuel cell produced in this example.

In this example, four unit cells were included in one cell module, and a fuel cell comprising eight cell modules, i.e., 32 unit cells, was fabricated. In order to reduce the variation of temperature among the unit cells, one cell module was designed such that every two unit cells were disposed between cooling water flow channels 78 and 78' in the cell module. Both a cooling water flowing through the cell module and a cooling water flowing through the cooling water flow channel 78' composed of the hollow sections in a retaining plate 80 were supplied and discharged through the cooling water manifolds.

The rest of the structure was the same as that of the fuel cell of Example 1 shown in FIG. 5. In FIG. 7, numeral 71 denotes a polymer electrolyte membrane, numeral 72 denotes a catalytic reaction layer, numeral 73 denotes a diffusion layer, numeral 74 denotes an electrode and numeral 75 denotes an MEA.

On the fuel cell fabricated in the above manner, a performance test was conducted by using a simulated reformed gas (80 % by volume of hydrogen, 20 % by volume of carbon dioxide and 100 ppm of carbon monoxide) as a fuel gas and air as an oxidant gas. The performance test was conducted as in Example 1, under the conditions of a hydrogen utilization ratio of 70%, an oxygen utilization ratio of 20%, a bubbler temperature for humidifying hydrogen of 85°C, a bubbler temperature for humidifying air of 75°C, a cell temperature of 75°C and a current density of 0.7 A/cm². Also, in the test, the operation of the cell was performed while measuring the voltage of each unit cell, and after the start of the operation, the cell module including a unit cell, whose closed circuit voltage dropped to 0.4 V, was taken out and a new cell module was inserted to continue the operation of the cell.

After the replacement of the module was conducted twice, the voltage of the fuel cell which had been operated for a cumulative total of 1600 hours dropped to 18.91 V, whereas the initial voltage was 19.11 V, confirming that a high performance was maintained for a long period. From this result, it was confirmed that the cell stack as a whole maintained a high performance over a long period by replacing a unit cell with deteriorated performance.

Here, an example was shown in the case of replacing a unit cell whose performance had been deteriorated during the operation of fuel cell; however, by adopting the structure of this example and applying it to, for instance, the final product check during the manufacturing of the fuel cell at a factory and replace only those unit cells with deteriorated performance, it is possible to reduce the manufacturing cost significantly.

### Industrial Applicability

The polymer electrolyte fuel cell and the method of using the same in accordance with the present invention allow an easy replacement of a defective unit cell or cell module comprising such unit cells, and therefore, they are expected to be applicable not only in a manufacturing situation of fuel cells but also at home.

## Claims

1. A polymer electrolyte fuel cell comprising a stack containing a plurality of unit cells laminated, compressed and retained via a retaining plate, said unit cell comprising a pair of electrodes sandwiching a polymer electrolyte membrane therebetween and conductive separator plates having a gas supply channel on at least one surface thereof and sandwiching said electrodes therebetween,
wherein said retaining plate forms a gap between said unit cells.

2. The polymer electrolyte fuel cell in accordance with claim 1, wherein said retaining plate is composed of two plates having an undulate cross section and has hollow sections which are separated from one another, and a cooling water flows through said hollow sections between said unit cells.

3. The polymer electrolyte fuel cell in accordance with claim 1, wherein said conductive separator plate is provided for every two unit cells and has a cooling water flow channel, and said retaining plate is provided for every one cell module comprising a plurality of said unit cells.

4. The polymer electrolyte fuel cell in accordance with claim 1, comprising a voltage measurement jig and a voltage display device for said unit cell.

5. A method of using a polymer electrolyte fuel cell comprising: a stack containing a plurality of unit cells laminated, compressed and retained via a retaining plate, said unit cell comprising a pair of electrodes sandwiching a polymer electrolyte membrane therebetween and conductive separator plates having a gas supply channel on at least one surface thereof and sandwiching said electrodes therebetween; a voltage measurement jig; and a voltage display device for said unit cell, wherein said retaining plate forms a gap between said unit cells or between cell modules each comprising a plurality of said unit cells, said method comprising the steps of:
measuring a voltage of said unit cell or said cell module; and
replacing said unit cell or said cell module when said voltage of said unit cell or said cell module is detected to be a predetermined value or less.
